# EUROPEAN PATENT APPLICATION

(11) **EP 2 775 745 A1**
(43) Date of publication of application: **10.09.2014**
(21) Application number: 12845038.4
(22) Date of filing: 29.10.2012
(51) Int. Cl.: H04W 12/02, H04W 92/18, G06Q 50/10, H04B 7/24

(54) **METHOD AND SYSTEM FOR PROVIDING INFORMATION USING A CONSENT PROCEDURE EXECUTED BY MEANS OF NEAR-FIELD COMMUNICATION**

(30) Priority: 31.10.2011 KR 20110111988
(71) Applicant: SK C&C Co., Ltd., Seongnam-si, Gyeonggi-do 463-844 (KR)
(72) Inventor: KIM, Dong Hyun, Yongin-si Gyeonggi-do 448-170 (KR)
(74) Representative: Walaski, Jan Filip
(86) International application number: PCT/KR2012/008916
(87) International publication number: WO 2013/066011

(57) **Abstract**

A method and system for providing information using a prior agreement procedure via proximity communication is provided. Upon receiving a request for an information providing agreement from a mobile terminal which is capable of proximity communication, the information providing method transmits the information providing agreement. Accordingly, since the mobile terminals request/allow the information providing agreement by using the proximity communication, the information leakage/exposure caused by an illegal use of other's name or identity theft can be prevented beforehand. In particular, since this process requires the users to meet face to face, the security can be further enhanced.

## Description

### Technical Field

The present invention relates to a method and system for providing information, and more particularly, to a method and system for providing information after executing a prior agreement procedure for providing information.

### Background Art

In recent years, mobile services have been actively expanding to mobile payment service, location information providing service, and other services areas. The location information providing service can be provided only if the user who will provide location information consent with the provision of the location information because it can possibly invades privacy of the user providing the information.

Currently, such a verbal consent can be made via a telephone call. However, when the person with ill intent impersonates as a location information provider and the user agrees with the provision of the location information over the phone, which may lead to the loss of private information used for illegal purpose.

Therefore, there is a demand for a method for preventing personal information like location information from being leaked/exposed to other malicious persons by an illegal use of a real user's name or identity theft.

### Disclosure

### Technical Problem

One or more exemplary embodiments provide a method and system for providing information, which can prevent information like location information from being leaked/exposed to other malicious persons by an illegal use of a real user's name or identity theft.

One or more exemplary embodiments also provide a method and system for providing information, which can prevent information leakage/exposure which may occur even when information is provided under a rightful agreement.

### Technical Solution

According to an aspect of an exemplary embodiment, there is provided a method for providing information, the method including: receiving, by a first mobile terminal which is able to perform proximity communication with a second mobile terminal, a request for an information providing agreement from the second mobile terminal; and, in response to the request, transmitting, by the first mobile terminal, an information providing agreement to the second mobile terminal, wherein the receiving the request for the information providing agreement is performed by using proximity communication when the first mobile terminal is placed in the proximity of the second mobile terminal.

The method may further include: in response to the agreement, receiving, by the first mobile terminal, a first key for encrypting information from the second mobile terminal; encrypting the information by using the first key; and transmitting the encrypted information to the second mobile terminal.

The transmitting the encrypted information may include transmitting the encrypted information to the second mobile terminal via a server.

The second mobile terminal may store a second key which is paired with the first key, and the second mobile terminal may decrypt the encrypted information received from the first mobile terminal by using the second key and may restore the information.

The proximity communication may be NFC.

According to an aspect of another exemplary embodiment, there is provided a mobile terminal including: a communication module configured to perform proximity communication with an external mobile terminal; and a control unit configured to, upon receiving a request for an information providing agreement from the external mobile terminal through the communication module, transmit the information providing agreement to the external mobile terminal through the communication module in response to the request, wherein, when the mobile terminal is placed in the proximity of the external mobile terminal, the control unit receives the request for the information providing agreement from the external mobile terminal through the communication module by using proximity communication.

According to an aspect of another exemplary embodiment, there is provided a method for providing information, the method including: requesting, by a second mobile terminal which is able to perform proximity communication with a first mobile terminal, an information providing agreement from the first mobile terminal; and receiving, by the second mobile terminal, the information providing agreement from the first mobile terminal as a response to the request, wherein the requesting the information providing agreement is performed by using proximity communication when the second mobile terminal is placed in the proximity of the first mobile terminal.

The method may further include: when the information providing agreement is received, generating, by the second mobile terminal, a first key and a second key which are paired with each other; transmitting, by the second mobile terminal, the first key to the first mobile terminal; storing, by the second mobile terminal, the second key; receiving information which is encrypted by the first mobile terminal by using the first key; and decrypting the encrypted information by using the second key and restoring the information.

The receiving the encrypted information may include receiving the encrypted information from the first mobile terminal via a server.

According to an aspect of another exemplary embodiment, there is provided a mobile terminal including: a communication module configured to perform proximity communication with an external mobile terminal; and a control unit configured to request an information providing agreement from the external mobile terminal through the communication module, and receive the information providing agreement from the external mobile terminal through the communication module as a response to the request, wherein the control unit requests the information providing agreement through the communication module by using proximity communication when the mobile terminal is placed in the proximity of the external mobile terminal.

### Advantageous Effects

According to the exemplary embodiments described above, since the mobile terminals request/allow the information providing agreement by using the proximity communication, the information leakage/exposure caused by an illegal use of other's name or identity theft can be prevented beforehand. In particular, since this process requires the users to meet face to face, the security can be further enhanced.

In addition, since the information is encrypted/decrypted by using the key pair which is shared and stored by the mobile terminal of the information provider and the mobile terminal of the information receiver when the information is provided under the rightful agreement, the information leakage/exposure can be prevented during the information providing process.

In addition, since the information to be provided is not stored in the server, the information can be more safely protected. Even when the information is stored in the server, high security protection can be guaranteed since the information is encrypted.

### Description of Drawings

FIG. 1 is a view to illustrate a process for executing a prior agreement procedure for providing location information according to an exemplary embodiment of the present invention;
FIG. 2 is a view to illustrate a method for providing location information after executing a prior agreement procedure according to another exemplary embodiment of the present invention; and
FIG. 3 is a block diagram illustrating a mobile terminal.

### Best Mode

Reference will now be made in detail to the embodiment of the present general inventive concept, examples of which are illustrated in the accompanying drawings, wherein like reference numerals refer to the like elements throughout. The embodiment is described below in order to explain the present general inventive concept by referring to the drawings.

According to exemplary embodiments, a prior agreement procedure which is necessary for providing location information, which is a kind of personal information, to other persons is executed by using Near Field Communication (NFC), and security of the location information is enhanced by encrypting/decrypting a key pair shared in the agreement procedure.

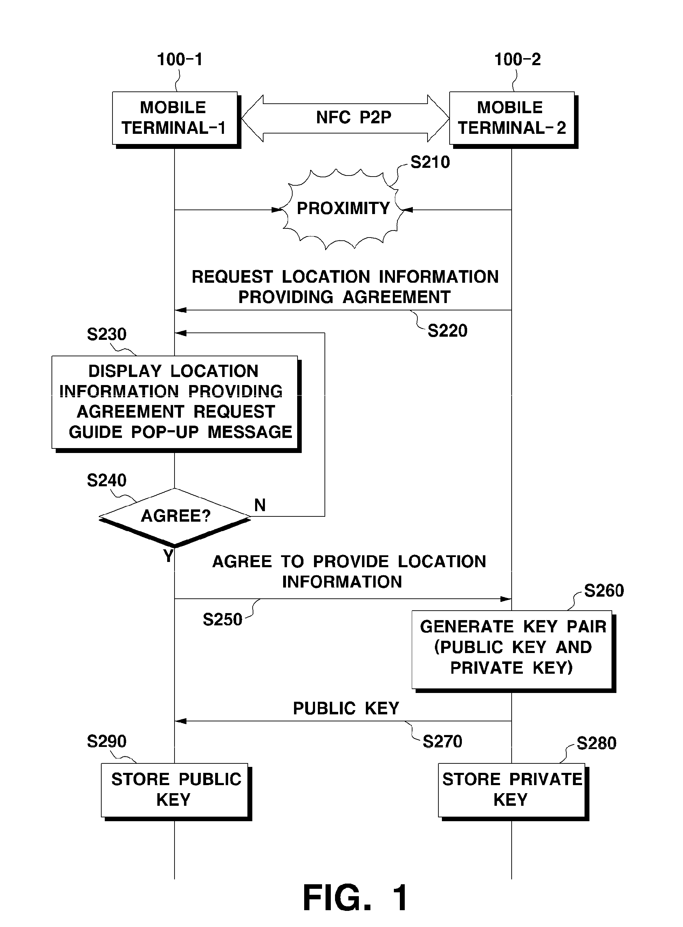

FIG. 1 is a view to illustrate a process for executing a prior agreement procedure for providing location information according to an exemplary embodiment of the present invention. Two mobile terminals are illustrated in FIG. 1. Specifically, a mobile terminal-1 100-1 is carried by a user-1 who provides his/her own location information, and a mobile terminal-2 100-2 is carried by a user-2 who wants to receive the location information of the user-1.

In order to receive the location information of the user-1, the user-2 should receive an agreement on the provision of the location information from the user-1. In the present exemplary embodiment, the agreement procedure is executed by using NFC Peer-To-Peer (P2P) between the mobile terminals 100-1 and 100-2.

As shown in FIG. 1, when the mobile terminal-1 100-1 and the mobile terminal-2 100-2 are placed in the proximity to each other to be able to perform NFC

(S210), the mobile terminal-2 100-2 requests a location information providing agreement from the mobile terminal-1 100-1 (S220).

The location information providing agreement request may record a telephone number of the mobile terminal-2 100-2.

The mobile terminal-1 100-1 informs the user-1 that the owner of the telephone number (user-2) has requested the location information providing agreement by displaying a pop-up message for guiding the location information providing agreement request along with the telephone number received in operation 220 (S230).

When the user-1 checks the guide pop-up message displayed in operation S230 and agrees to provide the location information by using a user inputting means of the mobile terminal-1 100-1 (S240-Y), the mobile terminal-1 100-1 transmits the location information providing agreement to the mobile terminal-2 100-2 by using NFC (S250).

The mobile terminal-2 100-2 which has received the location information provision agreement in operation S250 generates a key pair including a public key and a private key (S260).

The mobile terminal-2 100-2 transmits the public key generated in operation S260 to the mobile terminal-1 100-1 by using NFC (S270), and stores the private key generated in operation S260 in its storage medium (S280).

The mobile terminal-1 100-1 stores the public key received in operation 270 in its storage medium (S290).

Accordingly, the prior agreement procedure for providing the location information of the user-1 of the mobile terminal-1 100-1 to the user-2 of the mobile terminal-2 100-2 is completed and also the prior procedure for protecting the location information to be provided afterward is completed.

As shown in FIG. 1, in order to execute the prior agreement procedure, the users meet face to face and the mobile terminals communicate with each other by using NFC. Therefore, the location information can be prevented from being exposed to other persons by an illegal use of a real user's name.

In addition, since the mobile terminals share the key pair, which will be used to encrypt/decrypt the location information afterward, by using NFC, the key can be prevented from being exposed to other mobile terminals.

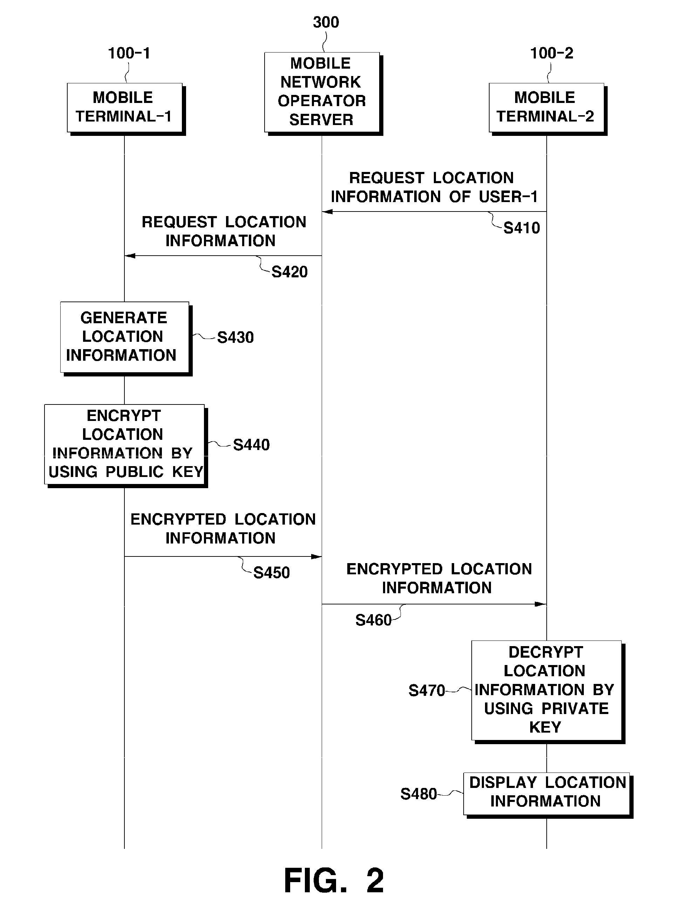

Hereinafter, a process for providing location information by using a key pair shared and stored in the prior agreement procedure of FIG. 1 will be explained with reference to FIG. 2. FIG. 2 is a view to illustrate a method for providing location information after executing the prior agreement procedure according to another exemplary embodiment of the present invention.

As shown in FIG. 2, when the mobile terminal-2 100-2 requests location information of the user-1 from a mobile network operator server 300 (S410), the mobile network operator server 300 transmits a location information request to the mobile terminal-1 100-1 (S420).

The location information request transmitted from the mobile terminal-2 100-2 to the mobile network operator server 300 in operation 410 records a telephone number of the mobile terminal-1 100-1. Accordingly, the mobile network operator server 300 transmits the location information request to the mobile terminal-1 100-1 with reference to the telephone number.

The mobile terminal-1 100-1 which has received the location information request in operation S420 generates its own location information (S430) and encrypts the location information by using the public key stored in operation S290 of FIG. 1 (S440). The location information may be generated by using a Global Positioning System (GPS) or Location Based Service (LBS).

Thereafter, when the mobile terminal-1 100-1 transmits the location information encrypted in operation S440 to the mobile network operator server 300 (S450), the mobile network operator server 300 transmits the encrypted location information received in operation S450 to the mobile terminal-2 (100-2) (S460).

The mobile terminal-2 100-2 decrypts the encrypted location information received in operation S460 by using the private key stored in operation S280 of FIG. 1, and restores the location information of the user-1 (S470).

Thereafter, the mobile terminal-2 100-2 displays the location information of the user-1 restored in operation S470 (S480), and informs the user-2 of the location information.

As described above, the location information is encrypted/decrypted by using the key pair shared in the agreement procedure, so that the location information can be prevented from being leaked/exposed during the location information providing process. Since the mobile network operator server 300 does not own the private key and thus is not able to decrypt the encrypted location information, the security of the location information is on a very high level.

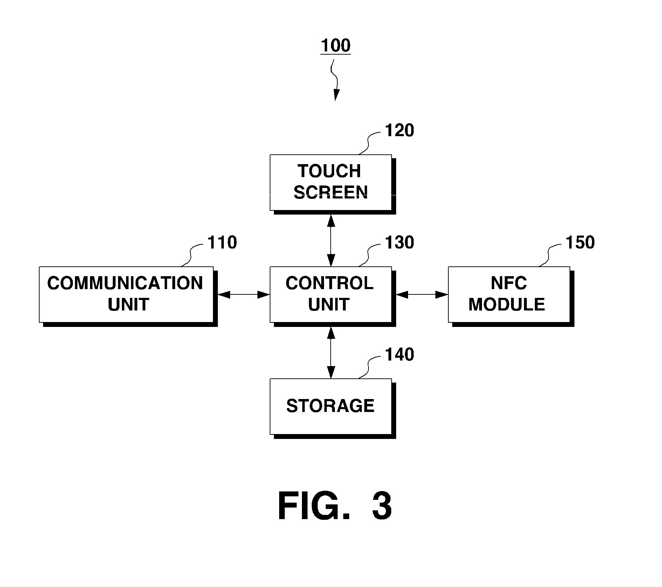

Hereinafter, a detailed configuration of the mobile terminals 100-1 and 100-2 shown in FIGS. 1 and 2 will be explained with reference to FIG. 3. Since the mobile terminal-1 100-1 and the mobile terminal-2 100-2 can be implemented by the same configuration, a representative mobile terminal is illustrated by using reference numeral 100 in FIG. 3.

As shown in FIG. 3, the mobile terminal 100 includes a communication unit 110, a touch screen 120, a control unit 130, a storage 140, and an NFC module 150.

The communication unit 110 connects to the mobile network operator server 300 via mobile communication or wireless network, and the NFC module 150 performs NFC P2P connection with the other mobile terminal which is in the proximity of the mobile terminal 100.

The touch screen 120 functions as a display to display visual information such as a guide pop-up message, location information, etc, and functions as a user interface to receive a user command such as location information providing request/agreement.

The storage 140 stores programs and data necessary for operating the mobile terminal 100. In particular, the storage 140 stores the public key and the private key and stores an application for performing the procedures of FIGS. 1 and 2.

The control unit 130 controls an overall operation of the mobile terminal 100 by using the programs and data stored in the storage 140. In particular, the control unit 130 executes the application for executing the procedures shown in FIGS. 1 and 2 to execute the corresponding procedures.

Up to now, the system and method for providing the location information after executing the prior agreement procedure by using NFC and sharing the key pair according to exemplary embodiments has been described.

In the above-described exemplary embodiments, the location information is provided at the request of the user-2. However, this is merely an example for convenience of explanation. The location information may be periodically provided without the request of the user-2 only when the user-1 agrees to provide the location information.

In addition, the location information of the user-1 may be provided to the user-2 at the request of the user-1. This is useful when the user-1 asks for help from the user-2 in a dangerous/emergency situation.

In addition, by adding a location information providing term to the location information providing agreement request or location information providing agreement, the location information providing term may be restricted/limited.

An application for executing the procedures of FIGS. 1 and 2 should be installed in both the mobile terminal-1 100-1 and the mobile terminal-2 100-2 to provide the location information according to an exemplary embodiment. This application may be downloaded from a server or a mobile terminal which downloads the application may transmit the application to another mobile terminal which does not download the application by using NFC.

For example, when the mobile terminal-2 100-2 of the user-2 which requests the location information of the user-1 downloads and installs the application, but the mobile terminal-1 100-1 of the user-1 does not download the application, the mobile terminal-2 100-1 may transmit the application to the mobile terminal-1 100-1 by using NFC at the same time of requesting the location information providing agreement.

In the above-described exemplary embodiment, the location information is provided. However, this is merely an example for easy understanding and convenience of explanation. The present invention can apply when other personal information or other information than personal information (for example, a list of phone numbers, a list of addresses, content files, etc.) are provided.

The NFC P2P mentioned above is an example of proximity communication and may be substituted with other types of proximity communication.

The technical idea of the present invention can apply to a computer-readable recording medium which records a computer program for performing the functions of the apparatus and method according to the exemplary embodiment. In addition, the technical idea of the various exemplary embodiments may be implemented in the form of a computer-readable code that is recorded on a computer-readable recording medium. Any data storage device that can be read by a computer and can store data may be used as the computer-readable recording medium. For example, the computer-readable recording medium may be a Read Only Memory (ROM), a Random Access Memory (RAM), a CD-ROM, a magnetic tape, a floppy disk, an optical disk, a hard disk drive, etc. In addition, the computer-readable code or program stored in the computer-readable recording medium may be transmitted through a network connected among computers.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing information, the method comprising:
receiving, by a first mobile terminal which is able to perform proximity communication with a second mobile terminal, a request for an information providing agreement from the second mobile terminal; and
in response to the request, transmitting, by the first mobile terminal, an information providing agreement to the second mobile terminal,
wherein the receiving the request for the information providing agreement is performed by using proximity communication when the first mobile terminal is placed in the proximity of the second mobile terminal.

2. The method of claim 1, further comprising:
in response to the agreement, receiving, by the first mobile terminal, a first key for encrypting information from the second mobile terminal;
encrypting the information by using the first key; and
transmitting the encrypted information to the second mobile terminal.

3. The method of claim 2, wherein the transmitting the encrypted information comprises transmitting the encrypted information to the second mobile terminal via a server.

4. The method of claim 2, wherein the second mobile terminal stores a second key which is paired with the first key, and
wherein the second mobile terminal decrypts the encrypted information received from the first mobile terminal by using the second key and restores the information.

5. The method of claim 1, wherein the proximity communication is NFC.

6. A mobile terminal comprising:
a communication module configured to perform proximity communication with an external mobile terminal; and
a control unit configured to, upon receiving a request for an information providing agreement from the external mobile terminal through the communication module, transmit the information providing agreement to the external mobile terminal through the communication module in response to the request,
wherein, when the mobile terminal is placed in the proximity of the external mobile terminal, the control unit receives the request for the information providing agreement from the external mobile terminal through the communication module by using proximity communication.

7. A method for providing information, the method comprising:
requesting, by a second mobile terminal which is able to perform proximity communication with a first mobile terminal, an information providing agreement from the first mobile terminal; and
receiving, by the second mobile terminal, the information providing agreement from the first mobile terminal as a response to the request,
wherein the requesting the information providing agreement is performed by using proximity communication when the second mobile terminal is placed in the proximity of the first mobile terminal.

8. The method of claim 7, further comprising:
when the information providing agreement is received, generating, by the second mobile terminal, a first key and a second key which are paired with each other;
transmitting, by the second mobile terminal, the first key to the first mobile terminal;
storing, by the second mobile terminal, the second key;
receiving information which is encrypted by the first mobile terminal by using the first key; and
decrypting the encrypted information by using the second key and restoring the information.

9. The method of claim 8, wherein the receiving the encrypted information comprises receiving the encrypted information from the first mobile terminal via a server.

10. A mobile terminal comprising:
a communication module configured to perform proximity communication with an external mobile terminal; and
a control unit configured to request an information providing agreement from the external mobile terminal through the communication module, and receive the information providing agreement from the external mobile terminal through the communication module as a response to the request,
wherein the control unit requests the information providing agreement through the communication module by using proximity communication when the mobile terminal is placed in the proximity of the external mobile terminal.
